# EUROPEAN PATENT SPECIFICATION

(11) **EP 2 121 433 B1**
(45) Date of publication and mention of the grant of the patent: **16.05.2012**
(21) Application number: 08701588.9
(22) Date of filing: 18.01.2008
(51) Int. Cl.: B64C 1/00

(54) **FUSELAGE STRUCTURAL COMPONENT OF AN AIRCRAFT OR SPACECRAFT, WITH A FOAM LAYER AS THERMAL INSULATION**
RUMPFSTRUKTURTEIL EINES LUFT- ODER RAUMFAHRZEUGS MIT EINER SCHAUMSTOFFLAGE ALS WÄRMEISOLIERUNG
COMPOSANT STRUCTURAL DE FUSELAGE D'AÉRONEF OU DE VÉHICULE SPATIAL COMPRENANT UNE COUCHE DE MOUSSE COMME ISOLANT THERMIQUE

(30) Priority: 23.01.2007 DE 102007003278; 23.01.2007 US 897121 P
(43) Date of publication of application: 25.11.2009
(73) Proprietor: Airbus Operations GmbH, 21129 Hamburg (DE)
(72) Inventor: KOLAX, Michael, 21147 Hamburg (DE); WENTZEL, Hans-Peter, 27305 Bruchhausen-Vilsen (DE); DOLZINSKI, Wolf-Dietrich, 27777 Ganderkesee (DE); HERRMANN, Ralf, 27777 Ganderkesee (DE)
(74) Representative: Isarpatent
(86) International application number: PCT/EP2008/050582
(87) International publication number: WO 2008/090097

(56) References cited:
- US-A- 4 416 349
- US-B2- 7 005 175

## Description

The present invention relates to a fuselage structural component for an aircraft or spacecraft, wherein at least one foam layer is provided, which forms a thermal insulation.

In cruising flight, the ambient temperature is normally about -50°C. Previous construction materials for fuselage structures absorb this temperature over time and then have corresponding surface temperatures on the inner side of the fuselage. For protection of the passengers, therefore, heat insulation is located on the inner side. This, however, is exposed to air circulation. As a consequence, the warmed cabin air is permanently cooled on the cold inner surface of the fuselage structure. In doing so, the occurrence of an abundant amount of condensation water cannot be prevented. This mechanism compels periodic redrying of the thermal insulation, which holds up to 400 kg of moisture. Furthermore, protective measures for corrosion protection are necessary, and also regular inspections of the protective measures. In this connection, corrosion damage on the fuselage structures, which can occur despite protective measures, must also be eliminated.

For limiting these quite significant consequences, as a rule the relative air humidity of the cabin air is lowered to about 15%. That is physiologically not in the optimum range. The very dry air in the cabin space, therefore, on long flights can lead to discomforts for passengers and crew.

The current prior art does not allow the condensation of larger amounts of water, with their consequences, being prevented. Carbon fibre reinforced composite (german abbreviation CFK) fuselage structures in this case behave like metal, but are sensitive to corrosion. Hybrid constructions, in which carbon fibre reinforced composite (CFK) components are combined with metal components, however, behave the most disadvantageously, since as a result of the pairing of these components in interaction with an electrolyte, such as condensation water, a galvanic corrosion results. Consequently, corresponding protective measures must be taken in order to separate the carbon fibre reinforced composite (CFK) components and metal components from each other so that they do not come into direct contact with each other. For this purpose, for example separating layers, such as glass fibre mats, are laid between the carbon fibre reinforced composite (CFK) components and metal components, and, furthermore, corresponding connecting means are used, which are coated for example with a glas fibre reinforced composite (german abbreviation GFK) material. Furthermore, the protective precautions must be regularly checked.

With carbon fibre reinforced composite (CFK) structures according to the prior art, there is also the fact that they have to be protected against impact stresses. This takes place as a rule by means of greater wall thicknesses, although these would not be absolutely necessary from the purely structural-mechanical point of view. This leads, furthermore, to an increase of weight, which should be saved just by the use of carbon reinforced fibre composite (CFK) components compared with metal components. This results in the practical weight advantage of known carbon fibre reinforced composite (CFK) structures in the fuselage being greatly reduced. The entire situation is characterized by mutual dependence of its individual elements, so that an improvement, therefore, can be achieved only by a new basic concept without these dependencies.

Further, US 4,416,349 A discloses viscoelastically damped reinforced skin structures wherein a sandwich skin having a relatively thick core is supported by structural elements, such as stringers and frames. In one form, a main skin is supported by stringers that are in turn supported by frames. The skin, stringers and frames are securely attached to one another by any suitable means, such as a bonding adhesive, rivets, bolts, etc. Located between the stringers are core layers formed of honeycomb or foam materials. A first plate overlies each core layer and extends to the flanges of the adjacent stringer. A second plate overlies each adjacent pair of first plates. The core layer is viscoelastically attached to the skin and the first plate; and, the first plate is viscoelastically attached to the stringer flanges and to the second plate.

Moreover, US 7,005,175 B2 discloses an aircraft fuselage shell which is fabricated of a double-walled composite structural component, including a core element bonded and sandwiched between an inner cover layer and an outer cover layer. The inner cover layer forms the main load bearing fuselage inner skin, and the outer cover layer forms the fuselage outer skin which carries a smaller proportion of the loads. The core element may consist of fiber-reinforced composite material while the cover layers may consist of an aluminum alloy, another metal, or fiber-reinforced composite material. The core element is air permeable and has air flow channels extending longitudinally therethrough in at least one direction. The cover layers do not seal or enclose the core element, so the core element is ventilatable. A ventilating airflow carries moisture as water vapor out of the core element, and then the moisture is condensed and removed by a moisture management unit.

The present invention, therefore, is based on the object of providing a fuselage structural component for an aircraft or spacecraft, which on the one hand forms heat insulation, and on the other hand provides an impact protection layer.

According to the invention, this object is achieved by means of a fuselage structural component, for an aircraft or spacecraft, with the features according to Claim 1, or by means of a fuselage according to Claim 15, and an aircraft or spacecraft according to Claim 16.

A first aspect of the present invention relates to a fuselage structural component for an aircraft or spacecraft, wherein at least one foam layer, which effects heat insulation and/or impact protection, is arranged between a non-load-bearing outer skin or outer skin panel, and a load-bearing inner framework structure, which foam layer fills out the interspace between the outer skin and the inner skin or the inner framework structure in such a way that the foam layer is essentially not exposed to air circulation. This has the advantage that the foam layer on the one hand acts as heat insulation or as thermal insulation, and on the other hand forms an additional impact protection, as a result of which the thickness of the outer skin can be correspondingly reduced. Consequently, weight can be saved and production costs can also be reduced. Furthermore, the occurrence of corrosion can be prevented and at the same time passenger comfort can be improved by means of a physiologically optimum relative air humidity in the cabin.

By means of the foam layer, effective heat insulation can be achieved, which essentially does not create today's condensation process. As a result, the inner surfaces of the fuselage wall can be left in a dry state. Moreover, a periodic redrying of the heat insulation is not necessary, since no condensation water is essentially formed and so the foam layer remains dry. Consequently, the cabin air does not also have to be separately kept dry, as is the case up to now in the prior art. In this way, the fuselage structural component according to the invention is particularly suitable for fuselage structures with a carbon fibre reinforced composite (CFK)-metal hybrid type of construction. In principle, the fuselage structural component according to the invention, however, can also be used for purely carbon fibre reinforced composite (CFK) or metal fuselage structures.

Furthermore, the foam layer, in addition to heat insulation, additionally undertakes impact protection in the case of a fuselage construction in a carbon fibre reinforced composite (CFK) type of construction.

A further advantage is that the heat insulation comprises simpler elements and can be applied easily and also in an automated way compared with the prior art. The foam layer in this case does not wear system elements or system control runs, as is the case of the prior art. In this way, an appreciable simplification and cost saving is achieved within the scope of aircraft assembly and aircraft maintenance.

In an embodiment according to the invention, frames are fastened on the inner side of the inner framework structure or of the inner skin, which faces the interior of the aircraft, while stringers are fastened on the outer side of the inner skin. In this case, neither stringers nor frames are fastened on the outer skin. This has the advantage that the inner skin can be formed as a load-bearing structural component, while the outer skin does not form a load-bearing structure and can be manufactured with the foam layer, for example as a preliminary component.

In another preferred embodiment, the outer skin and/or the inner skin or the inner framework structure are constructed in a carbon fibre reinforced composite (CFK) type of construction. This has the advantage that the weight saving can be utilized by means of the carbon fibre reinforced composite (CFK) material, especially also by the foam acting as additional impact protection. Consequently, for example the thickness of an outer skin consisting of a carbon fibre reinforced composite (CFK) material does not have to be unnecessarily increased. A further advantage is that if, for example, stringers and/or frames consisting of metal or a metal alloy are fastened on the outer skin and/or on the inner skin consisting of a carbon fibre reinforced composite (CFK) material, galvanic corrosion can essentially be prevented. As a result, the advantages of a carbon fibre reinforced composite (CFK) -metal hybrid construction can be exploited much more than was previously the case in the prior art, since the formation of condensation water can be essentially prevented.

In another embodiment according to the invention, the outer skin and/or the inner skin or the inner framework structure, have a metal type of construction. In this case, the formation of condensation water can also be prevented by means of the foam layer, and redrying of the foam layer, as was previously the case with metal fuselages according to the prior art, which were provided with an insulation, can be dispensed with.

According to a further embodiment according to the invention, the frames and/or stringers can be formed from a carbon fibre reinforced composite (CFK) material or can feature this, or can be selectively formed from metal or from a metal alloy, or can feature these. Such stringers and frames, for example, can be used with in the case of carbon fibre reinforced composite (CFK) -metal hybrid constructions, in which they are fastened on a skin panel consisting of carbon fibre reinforced composite (CFK) or metal. The fuselage structural component, as already described, is especially advantageous for carbon fibre reinforced composite (CFK) -metal hybrid constructions, since galvanic corrosion can be prevented.

In another embodiment according to the invention, the foam layer is attached on the inner side of the outer skin, which is orientated towards the interior of the aircraft. The foam layer in this case can be fastened on the outer skin by means of an adhesive. This has the advantage that the foam layer can be very simply fastened on the outer skin, especially if this is not formed as a structural component and therefore has a continuously smooth surface.

In a further preferred embodiment, the foam layer is produced from a non-combustible material. The foam layer can be produced for example from a phenolic foam or PMI foam. The foam layer in this case has the advantage that it acts as fire protection and furthermore acts as thermal insulation and impact protection.

In a further embodiment according to the invention, the foam layer has cut-outs, so that stringers or frames, which are provided on the opposite side of the foam layer, can be easily accommodated in the foam layer without compressing or squashing this. This has the advantage that the foam layer can essentially fill out the interspace between the outer skin and the inner skin or the inner framework structure, without larger air spaces being formed in between them.

In principle, the fuselage structural component can be formed in the form of a shell element or a fuselage barrel. As a result, it can be used both for fuselages in which shell elements are used, which can be integrated over the circumference, or can be used with fuselages in which fuselage barrels can be integrated over the length.

Further aspects of the invention relate to a fuselage with a fuselage structural component according to the invention, and an aircraft or spacecraft with a fuselage which is formed from fuselage structural components according to the invention.

The invention is explained in more detail in the following, based on exemplary embodiments with reference to the accompanying figures.

In the figures:
- Fig. 1: shows a detail of a fuselage structural component according to the invention in a perspective view; and
- Fig. 2: shows a detail of the inner side of an inner skin of the fuselage structural component according to the invention in a perspective view.

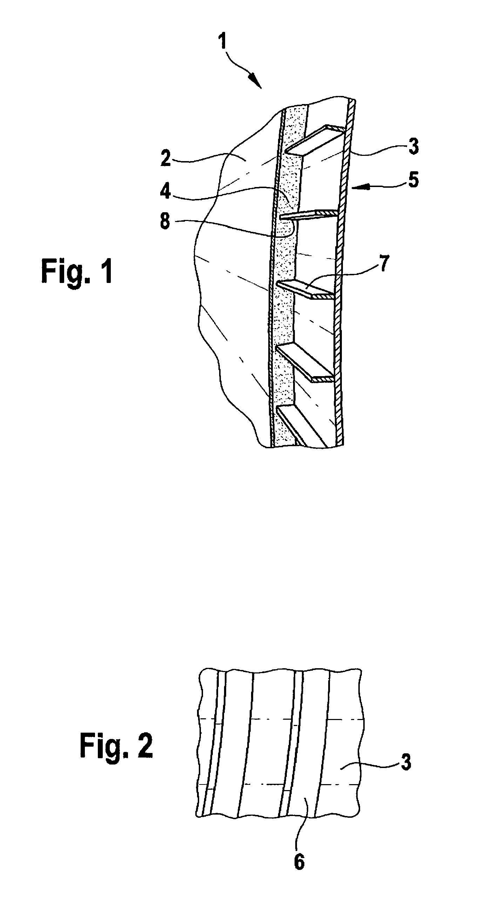

In Fig. 1, a detail of a fuselage structural component 1 according to the invention is shown. The fuselage structural component 1, which for example can be formed as a shell component or as a fuselage barrel, has an outer skin or outer skin panel 2 and an inner framework structure 3, especially an inner skin or inner skin panel 3. The fuselage structural components 1, as is known from the prior art, are later connected to an aircraft fuselage for example via rivets or via other suitable means of fastening. In this case, at least one foam layer 4 is arranged between the outer skin 2 and the inner skin 3. The foam layer 4 in this case can be fastened on the outer skin 2 and/or on the inner skin 3, for example by means of adhesive fastening.

As is shown in Fig. 1, the fuselage structural component 1 has an inner skin 3 which forms the framework 5. The inner skin 3 in this case can be formed as a monolithic lining, wherein the inner skin 3 for example can consist of a monolithic carbon reinforced fibre composite (CFK) prepreg. Alternatively, the inner skin 3 can also have a carbon fibre reinforced composite (CFK) sandwich structure or another suitable carbon fibre reinforced composite (CFK) type of construction. Instead of a carbon fibre reinforced composite (CFK) material, the inner skin 3 can also consist of metal, such as steel, aluminium and/or titanium, or a corresponding metal alloy. Furthermore, the inner skin 3 for example can also feature glas fibre reinforced composite (GFK) materials and/or aramid fibre reinforced composite (german abbreviation AFK) materials. Especially in the case of a carbon fibre reinforced composite (CFK) -metal hybrid type of construction, in which a metal or a metal alloy is used, which during contact with a carbon fibre reinforced composite (CFK) material and with an electrolyte leads to corrosion, corresponding protective measures can be provided. For this purpose, for example a separating layer (not shown), consisting of a glas fibre reinforced composite (GFK) or aramid fibre reinforced composite (AFK) material or a tedlar film, can be provided between the carbon fibre reinforced composite (CFK) component and the metal component.

On the side of the inner skin 3, which faces the interior of the aircraft, frames 6 can be fastened in order to brace the fuselage and/or to serve as force-introducing elements, as is shown in Fig. 2. Furthermore, stringers 7 can be attached on the outer side of the inner skin 3, as is shown in Fig. 1. The stringers 7 in this case for example can be adhesively fastened and/or fastened via rivets on the inner skin 3. This has the advantage that fewer parts are required for fastening the stringers 7, and, moreover, the installation cost can be reduced. Clips and/or so-called cleats (not shown) can also be selectively used for fastening the stringers 7. The stringers 7 in this case can be fastened for example in a spacing of 600 mm (pitch 600), as is shown in Fig. 1. In principle, however, another spacing or spacings can also be selected for the stringers 7, depending upon their purpose of application.

As stringers 7, for example customary profiles can be used, which are produced as a mass product. As is shown in Fig. 1, the stringers 7 in this case can extend essentially straight over a flat surface of the framework 5, wherein they do not cross with the frames 6 in the process, since these are attached on the inner side of the inner skin 3.

According to Fig. 1, the inner skin 3 forms the framework 5, so that it is not absolutely necessary to also form the outer skin 2 as a structural component. Therefore, neither stringers 7 nor frames 6 are fastened on the outer skin 2. In principle, however, it is also conceivable to form the outer skin 2 as a structural component and to fasten stringers 7 and/or frames 6 upon it. The outer skin 2, similar to the inner skin 3, can have a carbon fibre reinforced composite (CFK) type of construction, i.e. can be formed for example as a carbon fibre reinforced composite (CFK) prepreg or in a carbon fibre reinforced composite (CFK) sandwich type of construction. Alternatively, the outer skin 2 can also be formed from metal, such as steel, aluminium and/or titanium, or a corresponding metal alloy, as is known from the prior art.

The outer skin 2 is preferably optimized against impacts from outside. In other words, the outer skin 2 is suitably formed in its dimensioning and type of construction in order to absorb impacts or shocks from outside. Furthermore, the outer skin 2 on the outside preferably has forms a smooth surface, i.e. no Zeppelin effect occurs, in which an inner framework is reproduced on the outside on the outer skin 2.

As is further shown in Fig. 1, the foam layer 4 can be fastened on the outer skin 2. The foam layer 4 in this case serves for insulation of the interior of the aircraft, especially of the aircraft cabin in relation to the environment outside the aircraft. The foam layer 4 in this case fills out the interspace between the outer skin 2 and the inner skin 3 in such a way that the foam layer 4 is essentially not exposed to air circulation.

The thermal insulation is laid on the outside by the provision of the foam layer 4 in the interspace between the outer skin 2 and the inner skin 3, or between the outer skin 2 and the inner framework structure or the framework 5.

The foam layer 4, which serves as thermal insulation, in this case can be adhesively fastened on the outer skin 2 and, as a result of this, can be provided as a prefabricated component. In a later installation step, the outer skin 2 is subsequently fastened along with the insulation 4 on the framework 5. The foam layer 4 is preferably essentially fire-resistant or combustible with difficulty. The foam layer 4 for example consists of a phenolic foam or PMI foam. This is generally a closed-cell foam (reinforced or unreinforced). In this case, the foam layer 4 can also serve for soundproofing in addition to fire protection. Furthermore, the foam layer 4 can consist of one or more foam laminates, wherein in the case of a plurality of foam laminates different foams can also be combined. The foam layer 4, moreover, can be provided with cut-outs 8 for the stringers 7, as is shown in Fig. 1. This has the advantage that the stringers 7 can be very simply accommodated in the foam layer 4 without compressing this. In principle, the foam layer, however, can also be provided without such cut-outs 8.

The heat insulation according to the invention, as already described, can be attached in a suitable manner on the outer side of the aircraft fuselage. For satisfying aerodynamic characteristics and a natural robustness, the surface preferably comprises a thin outer skin 2 without a structurally load-bearing function in the sense of aircraft loads. As a consequence, the load-bearing fuselage structure no longer experiences the ambient temperature (minus 50°C). The mechanism, which today leads to condensation of the cabin air moisture on the cold inner surface, no longer takes place. Consequently, a lowering of the relative air moisture, as was already described, is not necessary. This can be maintained in a physiologically beneficial yet comfortable range. Furthermore, the corrosion protection and inspection measures, which are linked to the previous construction, in this case are be dispensed with, since an electrolyte is no longer supplied from this source. By means of the foam layer 4, therefore, condensation, and consequently the occurrence of corrosion, can be effectively prevented.

In everyday operation, a moisture accumulation in the insulation no longer takes place. The corresponding weight increase, for example of up to 400 kg, and the costly process of redrying of the insulation, are dispensed with.

Moreover, the foam layer 4 between the outer skin 2 and the framework 5 provides an additional impact protection in the case of a carbon fibre reinforced composite (CFK) fuselage construction. This allows an optimum thickness design of the fuselage skin, and at this point is suitable for saving weight, since the thickness of the fuselage skin does not necessarily have to be additionally increased in order to achieve an impact protection.

In addition, damage to the outer shell of the fuselage is easily repairable if the outer skin 2 is not formed as a structural component or the outer shell is not a load-bearing part of the aircraft structure. At the same time, insulating elements which were installed before this no longer obstruct the necessary access to the structure and system control run on the inner side, as was previously the case in the prior art. This leads to a simplification of service.

Although the present invention was described in the present case based on preferred exemplary embodiments, it is not limited to these but can be modified in a variety of ways.

## Claims

1. Fuselage structural component (1) of an aircraft or spacecraft, with an outer skin (2) and an inner framework structure (3), wherein a foam layer (4), which acts as heat insulation and as impact protection, is arranged between the outer skin (2) and the inner framework structure (3), **characterized in that** the outer skin (2) is non-load-bearing, the inner framework structure (3) is load-bearing, and **in that** stringers (7) and/or frames (6) are arranged on the outer side of the inner framework structure (3) and the foam layer (4) fills out the interspace between the outer skin (2) and the inner framework structure (3).

2. Fuselage structural component (1) according to Claim 1,
**characterized in that**,
frames (6) and/or stringers (7) are arranged on the inner side of the inner framework structure (3) which is orientated towards the interior of the aircraft.

3. Fuselage structural component (1) according to Claim 1 or 2,
**characterized in that**,
the foam layer (4) consists of one or more foam laminates, wherein in the case of a plurality of foam laminates different foams can be combined.

4. Fuselage structural component (1) according to at least one of the preceding claims,
**characterized in that**,
the outer skin (2) and the inner framework structure (3) have a carbon fibre reinforced composite type of construction.

5. Fuselage structural component (1) according to at least one of the preceding claims,
**characterized in that**,
the inner framework structure (3) has a metal type of construction, wherein the inner framework contruction (3) consist of an aluminium, steel and/or titanium alloy.

6. Fuselage structural component (1) according to at least one of Claims 1 to 5,
**characterized in that**,
the frames (6) and/or stringers (7) are produced from a carbon fibre reinforced composite material, or feature a carbon fibre reinforced composite material.

7. Fuselage structural component (1) according to at least one of Claims 1 to 6,
**characterized in that**,
the frames (6) and/or stringers (7) are produced from metal or a metal alloy, or feature metal or a metal alloy.

8. Fuselage structural component (1) according to at least one of the preceding claims,
**characterized in that**,
the foam layer (4) is attached on the inner side of the outer skin (2) which is orientated towards the interior of the aircraft, and/or is attached on the outer side of the inner framework structure (3), and fills out the interspace between the outer skin (2) and the inner framework structure (3).

9. Fuselage structural component (1) according to Claim 8,
**characterized in that**,
the foam layer (4) can be fastened by means of adhesive on the outer skin (2) and/or on the inner framework structure (3).

10. Fuselage structural component (1) according to at least one of the preceding claims,
**characterized in that**,
the foam layer (4) is formed from a non-combustible material.

11. Fuselage structural component (1) according to at least one of the preceding claims,
**characterized in that**,
the foam layer (4) is formed from a phenolic foam or PMI foam.

12. Fuselage structural component (1) according to at least one of the preceding claims,
**characterized in that**,
the foam layer (4) is arranged between the outer skin (2) and the inner framework structure (3) in such a way that it is preferably essentially not exposed to air circulation.

13. Fuselage structural component (1) according to at least one of the preceding claims,
**characterized in that**,
the foam layer (4) has cut-outs (8) in which stringers (7) and/or frames (6) can be accommodated.

14. Fuselage structural component (1) according to at least one of the preceding claims,
**characterized in that**,
the fuselage structural component (1) is formed in the form of a shell element or a fuselage barrel.

15. Fuselage of an aircraft or spacecraft, with a fuselage structural component (1) according to at least one of the preceding claims.

16. Aircraft or spacecraft, with a fuselage according to Claim 15.

## Patentansprüche

1. Rumpfstrukturkomponente (1) eines Luft- oder Raumfahrzeugs mit einer Außenhaut (2) und einer inneren Rahmenstruktur (3), wobei eine Schaumschicht (4), die als Wärmedämmung und als Aufprallschutz fungiert, zwischen der Außenhaut (2) und der inneren Rahmenstruktur (3) angeordnet ist, **dadurch gekennzeichnet, dass** die Außenhaut (2) nicht-lasttragend ist,
die innere Rahmenstruktur (3) lasttragend ist, und dass Längsversteifungen (7) und/oder Rahmen (6) auf der Außenseite der inneren Rahmenstruktur (3) angeordnet sind, und
die Schaumschicht (4) den Raum zwischen der Außenhaut (2) und der inneren Rahmenstruktur (3) ausfüllt.

2. Rumpfstrukturkomponente (1) nach Anspruch 1, **dadurch gekennzeichnet, dass** Rahmen (6) und/oder Längsversteifungen (7) auf der Innenseite der inneren Rahmenstruktur (3) angeordnet sind, die in Richtung des Flugzeuginneren weist.

3. Rumpfstrukturkomponente (1) nach Anspruch 1 oder 2, **dadurch gekennzeichnet, dass** die Schaumschicht (4) aus einem oder mehreren Schaumlaminaten besteht, wobei im Fall der Verwendung mehrerer Schaumlaminate verschiedene Schaumstoffe miteinander kombiniert werden.

4. Rumpfstrukturkomponente (1) nach mindestens einem der vorangehenden Ansprüche, **dadurch gekennzeichnet, dass** die Außenhaut (2) und die innere Rahmenstruktur (3) aus einem Kohlefaser-Verbundwerkstoff bestehen.

5. Rumpfstrukturkomponente (1) nach mindestens einem der vorangehenden Ansprüche, **dadurch gekennzeichnet, dass** die innere Rahmenstruktur (3) aus einem Metall besteht, und zwar aus einer Aluminium-, Stahl- und/oder Titanlegierung.

6. Rumpfstrukturkomponente (1) nach mindestens einem der Ansprüche 1 bis 5, **dadurch gekennzeichnet, dass** die Rahmen (6) und/oder Längsversteifungen (7) aus einem Kohlefaser-Verbundwerkstoff bestehen oder einen Kohlefaser-Verbundwerkstoff enthalten.

7. Rumpfstrukturkomponente (1) nach mindestens einem der Ansprüche 1 bis 6, **dadurch gekennzeichnet, dass** die Rahmen (6) und/oder Längsversteifungen (7) aus einem Metall oder einer Metalllegierung bestehen oder ein Metall oder eine Metalllegierung enthalten.

8. Rumpfstrukturkomponente (1) nach mindestens einem der vorangehenden Ansprüche, **dadurch gekennzeichnet, dass** die Schaumschicht (4) an der Innenseite der Außenhaut (2) angebracht ist, die in Richtung des Flugzeuginneren weist, und/oder an der Außenseite der inneren Rahmenstruktur (3) angebracht ist und den Raum zwischen der Außenhaut (2) und der inneren Rahmenstruktur (3) ausfüllt.

9. Rumpfstrukturkomponente (1) nach Anspruch 8, **dadurch gekennzeichnet, dass** die Schaumschicht (4) mit Hilfe eines Klebstoffs an der Außenhaut (2) und/oder an der inneren Rahmenstruktur (3) angebracht werden kann.

10. Rumpfstrukturkomponente (1) nach mindestens einem der vorangehenden Ansprüche, **dadurch gekennzeichnet, dass** die Schaumschicht (4) aus einem nicht-brennbaren Material besteht.

11. Rumpfstrukturkomponente (1) nach mindestens einem der vorangehenden Ansprüche, **dadurch gekennzeichnet, dass** die Schaumschicht (4) aus einem Phenolschaumstoff oder PMT-Schaumstoff besteht.

12. Rumpfstrukturkomponente (1) nach mindestens einem der vorangehenden Ansprüche, **dadurch gekennzeichnet, dass** die Schaumschicht (4) zwischen der Außenhaut (2) und der inneren Rahmenstruktur (3) in einer solchen Weise angeordnet ist, dass sie vorzugsweise im Wesentlichen keiner Luftzirkulation ausgesetzt ist.

13. Rumpfstrukturkomponente (1) nach mindestens einem der vorangehenden Ansprüche, **dadurch gekennzeichnet, dass** die Schaumschicht (4) Ausschnitte (8) aufweist, in denen Längsversteifungen (7) und/oder Rahmen (6) aufgenommen werden können.

14. Rumpfstrukturkomponente (1) nach mindestens einem der vorangehenden Ansprüche, **dadurch gekennzeichnet, dass** die Rumpfstrukturkomponente (1) in der Form eines Schalenelements oder eines Rumpfzylinders ausgebildet ist.

15. Rumpf eines Luft- oder Raumfahrzeugs mit einer Rumpfstrukturkomponente (1) nach mindestens einem der vorangehenden Ansprüche.

16. Luft- oder Raumfahrzeugs mit einem Rumpf nach Anspruch 15.

## Revendications

1. Composant structural (1) de fuselage d'aéronef ou de véhicule spatial, avec une peau externe (2) et une structure d'ossature interne (3), dans lequel une couche de mousse (4) agissant comme une isolation thermique et comme une protection contre les chocs est disposée entre la peau externe (2) et la structure d'ossature interne (3), **caractérisé par le fait que**
la peau externe (2) est non porteuse,
la structure d'ossature interne (3) est porteuse, et que des longerons (7) et/ou cadres (6) sont disposés sur la face externe de la structure d'ossature interne (3) et la couche de mousse (4) remplit l'espace intermédiaire entre la peau externe (2) et la structure d'ossature interne (3).

2. Composant structural (1) de fuselage selon la revendication 1, **caractérisé par le fait que** des cadres (6) et/ou des longerons (7) sont disposés sur la face interne de la structure d'ossature interne (3) qui est orientée vers l'intérieur de l'aéronef.

3. Composant structural (1) de fuselage selon la revendication 1 ou 2, **caractérisé par le fait que** la couche de mousse (4) est constituée d'une ou plusieurs lamelles de mousse, dans lequel, dans le cas d'une pluralité de lamelles de mousse, différentes mousses peuvent être combinées.

4. Composant structural (1) de fuselage selon au moins une des revendications précédentes, **caractérisé par le fait que** la peau externe (2) et la structure d'ossature interne (3) ont une construction de type composite renforcé de fibres de carbone.

5. Composant structural (1) de fuselage selon au moins une des revendications précédentes, **caractérisé par le fait que** la structure d'ossature interne (3) a une construction de type métallique, dans lequel la construction d'ossature interne (3) est constituée d'un alliage d'aluminium, d'acier et/ou de titane.

6. Composant structural (1) de fuselage selon au moins une des revendications 1 à 5, **caractérisé par le fait que** les cadres (6) et/ou longerons (7) sont produits à partir d'un matériau composite renforcé de fibres de carbone, ou font figurer un matériau composite renforcé de fibres de carbone.

7. Composant structural (1) de fuselage selon au moins une des revendications 1 à 6, **caractérisé par le fait que** les cadres (6) et/ou longerons (7) sont produits à partir de métal ou d'alliage de métaux, ou font figurer du métal ou un alliage de métaux.

8. Composant structural (1) de fuselage selon au moins une des revendications précédentes, **caractérisé par le fait que** la couche de mousse (4) est fixée à la face interne de la peau externe (2) qui est orientée vers l'intérieur de l'aéronef, et/ou est fixée à la face externe de la structure d'ossature interne (3), et remplit l'espace intermédiaire entre la peau externe (2) et la structure d'ossature interne (3).

9. Composant structural (1) de fuselage selon la revendication 8, **caractérisé par le fait que** la couche de mousse (4) peut être fixée au moyen d'un adhésif sur la peau externe (2) et/ou sur la structure d'ossature interne (3).

10. Composant structural (1) de fuselage selon au moins une des revendications précédentes, **caractérisé par le fait que** la couche de mousse (4) est formée d'un matériau non combustible.

11. Composant structural (1) de fuselage selon au moins une des revendications précédentes, **caractérisé par le fait que** la couche de mousse (4) est formée d'une mousse phénolique ou d'une mousse PMT.

12. Composant structural (1) de fuselage selon au moins une des revendications précédentes, **caractérisé par le fait que** la couche de mousse (4) est disposée entre la peau externe (2) et la structure d'ossature interne (3) de telle manière qu'elle n'est préférentiellement essentiellement pas exposée à la circulation d'air.

13. Composant structural (1) de fuselage selon au moins une des revendications précédentes, **caractérisé par le fait que** la couche de mousse (4) a des découpes (8) dans lesquelles des longerons (7) et/ou des cadres (6) peuvent être logés.

14. Composant structural (1) de fuselage selon au moins une des revendications précédentes, **caractérisé par le fait que** le composant structural (1) de fuselage se présente comme un élément en forme de coque ou d'un tube de fuselage.

15. Fuselage d'un aéronef ou d'un véhicule spatial, doté d'un composant structural (1) de fuselage selon au moins une des revendications précédentes.

16. Aéronef ou véhicule spatial, doté d'un fuselage selon la revendication 15.
